# EUROPEAN PATENT SPECIFICATION

(11) **EP 1 289 832 B1**
(45) Date of publication and mention of the grant of the patent: **25.02.2004**
(21) Application number: 01931356.8
(22) Date of filing: 25.05.2001
(51) Int. Cl.: B64D 23/00

(54) **AIRBORNE LANDING SIMULATOR**
LUFTLANDESIMULATOR
SIMULATEUR VOLANT

(30) Priority: 13.06.2000 CZ 200010877 U
(43) Date of publication of application: 12.03.2003
(73) Proprietor: Jaros, Vladimir, 197 00 Praha 9 - Kbely (CZ); Kubalek, Ladislav, 150 00 Praha 5 - Stodulky (CZ)
(72) Inventor: Jaros, Vladimir, 197 00 Praha 9 - Kbely (CZ); Kubalek, Ladislav, 150 00 Praha 5 - Stodulky (CZ)
(74) Representative: Andera, Jiri
(86) International application number: PCT/CZ2001/000033
(87) International publication number: WO 2001/096180

(56) References cited:
- US-A- 2 102 522
- US-A- 2 311 171
- US-A- 2 413 701
- US-A- 5 203 744

## Description

### Technical Field

The invention relates to an airborne simulator for methodological rehearsal and training of partial elements and combined activities in various versions of airborne landing.

### Background Art

Simulation tools used so far in the current training practice enable to rehearse just the partial elements of the airborne landing. There are just limited numbers of those tools and they are mostly the obsolete devices from the material and functionality point of view and they are quite often built in a stationary manner at the places where they lost their functionality due to reorganisations.

### Disclosure of Invention

The above mentioned deficiencies are eliminated by the original airborne simulator according to the invention that comprises a basic structure created by a crane with travel. The use of a crane for parachute training is known from US-A-2 311 171. Suspension modules are fixed to the carrying rope of the crane. The basic structure is located in the area containing terrain elements. Crane arm is rotating in the 360° circle and allows both a horizontal movement of the anchoring point of the carrying rope along the arm and a vertical movement of the carrying rope by means of winch with an electric and manual operation. Carrying capacity of the crane is up to 1200 kg. The crane is provided with means for travelling along rails or with a caterpillar chassis or wheel undercarriage. Suspension modules fixed to the carrying crane rope consists of a helicopter or aircraft cabin and/or a parachute. Cabin contains equipment identical to real cabin equipment such as benches, doors, securing elements and abseil arms. Parachute is provided with accessories identical to real parachute accessories for binding and for simulating parachute control. Terrain elements are formed by ground surfaces such as the concrete, barn floor, mud, sand, water and rock surfaces and/or artificial and country objects, such as buildings, streets, yards, water reservoirs, rock structures and forest stands.

Advantages of the airborne landing simulator as of this invention consists in improvement; higher efficiency and intensity of training of the airborne landing in the simultaneously unobjectionable environment conditions and relatively negligible demands on operation. In addition to the formation and development of the individual airborne landing capacities and skills, it contributes to strengthening of psychical resistance, formation of the positive performance motivation and, on the other hand, to the removal of negative emotions from heights (fear, uncertainty, confusing or rigid behaviour and experiencing, etc.) Modelling of the real terms also allows training and rehearsing the methods for management, communication and organisation of the airborne landing before its start-up, during its course and after its termination on the ground.

Airborne landing simulator surpasses the existing training facilities by its relatively high height of the rehearsed activities and allows to apply a gradual, easier and quicker transfer to the final stage of the airborne training with the flying devices.

Airborne landing simulator enables the simulated training of the airborne landing from a helicopter (aircraft) on parachutes (activity before the parachute jump, leap, control of fall, landing manoeuvre, releasing the parachute above the water surface, etc.), landing by abseiling on the thin mountaineering rope or fast rope, airborne landing from a ground flight up to 30 km/h from the height of 2 m or airborne landing with landing of the helicopter (aircraft). Simulator also allows to rehearse the alighting from the transport and fighting vehicles during their drive.

Simulator further provides the set of the other activities performed in considerable heights such as rope traverses, ropeways on inclined rope, saving of an injured person on the rope, transport of an injured person by the helicopter in suspension on the rope, specific climbing techniques (jümaring, prusiking) etc. The used method of a comprehensive modelling of the situation conditions allows all performances with fall on various surfaces (grass, concrete, sand etc.) and on various structures (buildings, water reservoirs, hilly terrain, etc.).

Proposed invention stresses mobility of the simulator in addition to the methodological, environmental and economic side of its rehearsing intention. Thanks to this property, the simulator can be adjusted to the transportation position in a very short time and moved into a new destination.

### Brief Description of Drawings

Invention will be explained by means of drawings in more details. Fig. 1 shows axonometric view of the airborne simulator design, Fig. 2 gives the view of the airborne simulator located in the area with various terrain elements. Fig. 3, shows a horizontal projection of the airborne simulator and various terrain elements from the top.

### Modes for Carrying Out the Invention

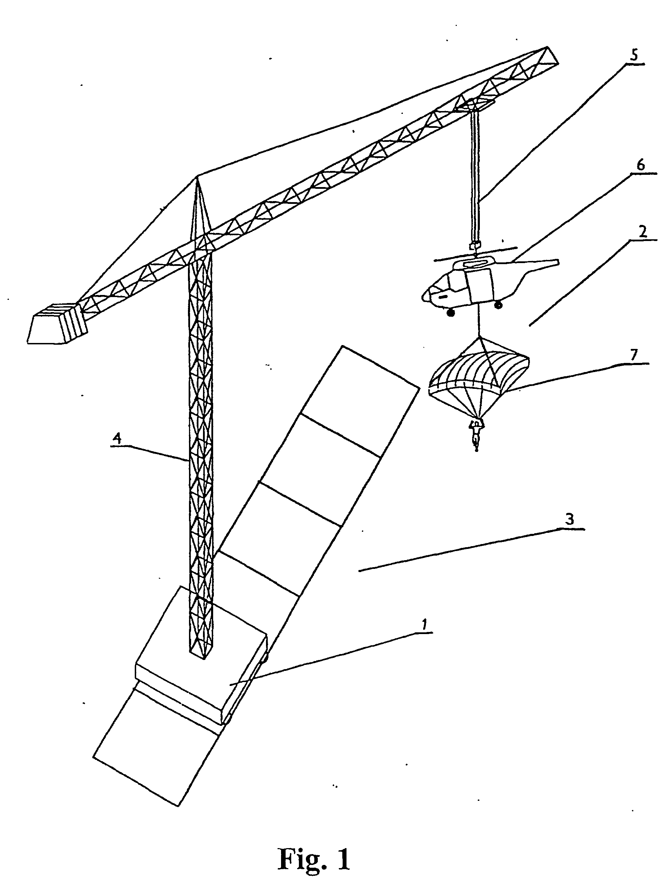

The airborne simulator as of Fig. 1 comprises of the basic structure 1 made by the crane 4 with travel and located at the training area. The crane 4 is provided with the carrying rope 5 to which the suspension module 2, which is the helicopter cabin 6 in the depicted case, is attached. The parachute 7 with a trainee is on the dropping rope 5 attached to the helicopter.

In compliance with the standard, the suspension modules 2 are fixed to the carrying rope 5 and they can move horizontally and vertically. Winch brake of the carrying rope 5 of the crane 4 prevents the modules 2 from falling on the platform and it is possible to control the reeling-up and unwinding speed of the carrying rope 5 by such brake and to select the height for stopping of modules 2 above the ground.

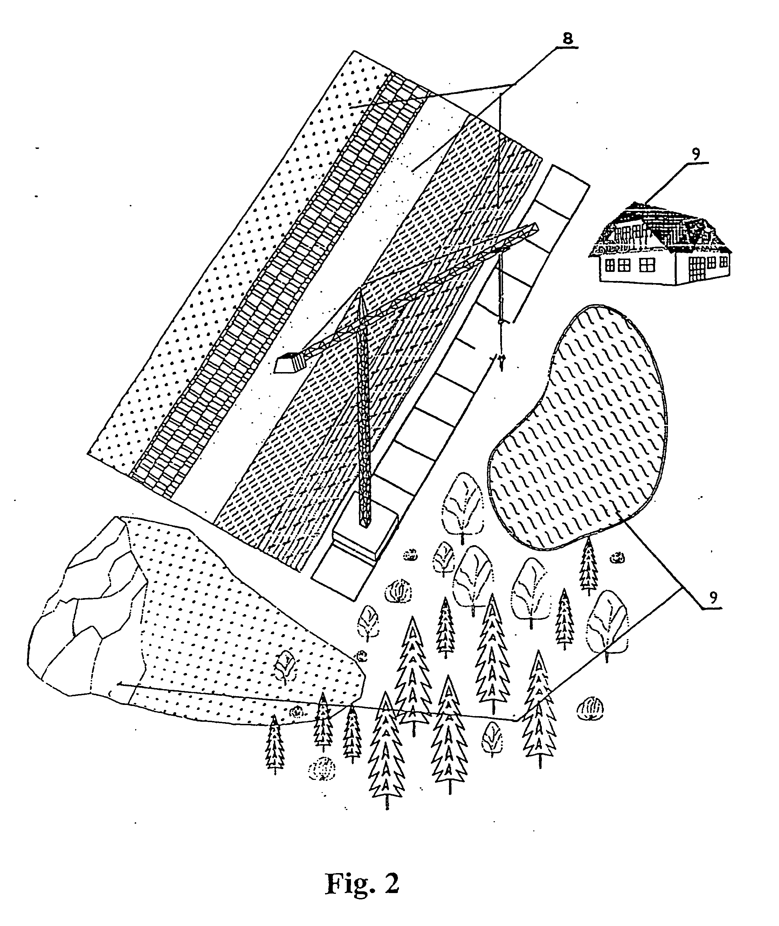

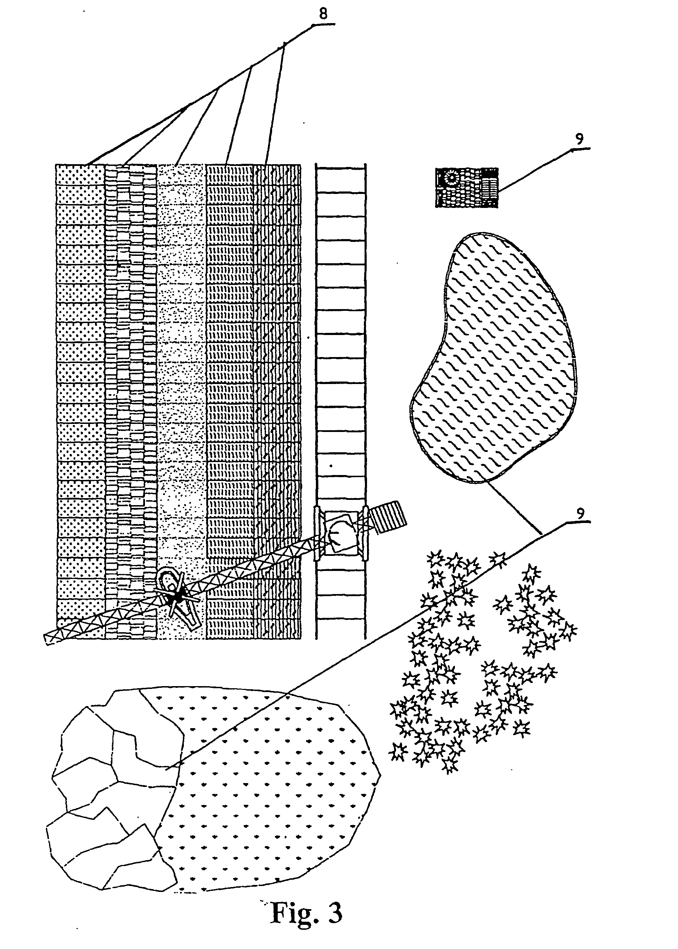

Basic structure 1 as of Fig. 2 and Fig. 3 is located in the area containing the terrain elements 3 that consist of the land surfaces 8 and artificial and country structures 9.

### Industrial applicability

Invention may be used for preparation of military specialists (paratroopers, feelers, chemical, signalling and engineering specialists, peace-keeping forces, military rescue workers, etc.), police (intervention units, special troops, specialist for transport police, etc.), fire rescue specialists and other rescue units (mountain services, health, water, gas, crude oil and mine rescue services, etc.).

Simulator allows bridging the current sensible outages in the airborne training of all those professions that reflects the decreased subsidies in the growing economic requirements for the flight traffic.

## Claims

1. Airborne simulator for methodological rehearsing and training of the partial elements and combined activities in various versions of airborne landing **characterized by the fact** that it comprises a crane (4) with a travel to the carrying rope (5) of which a helicopter or aircraft cabin (6) is attached and the crane (4) is located in the area containing terrain elements (3), while the arm of the crane (4) is rotatable within 360° circle and thus allowing both the horizontal movement of the anchoring point of the carrying rope (5) along the arm and the vertical movement of the carrying rope (5) by means of a winch with an electric or manual control.

2. Airborne simulator as in Claim 1, **wherein** the crane (4) is provided with means for travelling over rails or is equipped with a caterpillar chassis or wheel undercarriage.

3. Airborne simulator as in Claim 1 or 2, **wherein** the helicopter or aircraft cabin (6) provided with elements identical to the real cabin equipment, such as benches, doors, securing elements and abseil arms.

4. Airborne simulator as in Claims 1, 2, 3, **wherein** the terrain elements (3) are formed by ground surfaces (8), such as concrete, barn-floor, grass, mud, sand, water and rock surfaces and/or artificial and country structures (9) such as buildings, streets, yards, water reservoirs, rock structures, forest stand.

## Patentansprüche

1. Luftlandesimulator für methodologische Übung und Training von Teil- und Gesamttätigkeiten bei verschiedenen Varianten von Truppenlandung, **dadurch gekennzeichnet, dass** der Simulator durch einen Kran (4) mit einer Katzenfahrt und Tragseil (5) gebildet ist, zu dem eine Hubschrauber- oder Flugzeugkabine (6) befestigt ist, und der Kran (4) im Raum mit Terrainelementen (3) platziert ist, wobei Ausleger des Kranes (4) im Winkel von 360° drehbar ist und so eine horizontale Bewegung des Ankerpunktes des Tragseils (5) entlang des Auslegers sowie eine vertikale Bewegung des Tragseils (5) mittels einer Wickelwinde mit elektrischem oder manuellem Antrieb ermöglicht.

2. Luftlandesimulator nach Anspruch 1, **dadurch gekennzeichnet, dass** der Kran (4) mit Mitteln zur Bewegung auf Schienen oder mit Raupen- oder Radfahrgestell ausgestattet ist.

3. Luftlandesimulator nach Anspruch 1 oder 2, **dadurch gekennzeichnet, dass** die Hubschrauber- oder Flugzeugkabine (6) mit Ausstattung wie Sitze, Tür, Sicherheitselemente und Abseilarm, ausgestattet ist, die mit wahrer Kabinenausstattung identisch ist.

4. Luftlandesimulator nach einem der Ansprüche 1, 2, 3, **dadurch gekennzeichnet, dass** die Terrainelemente (3) durch Erdoberflächen (8) wie Beton- Tennenboden-, Gras-, Schlamm-, Sand-, Wasser- und Felsflächen und/oder durch künstliche und Naturstrukturen (9) wie Gebäude, Strassen, Höfe, Wasserbecken, Felsen, Wälder, gebildet sind.

## Revendications

1. Un simulateur parachuté pour l'entraînement méthodologique des activités partielles et combinées en diverses versions de droppage, **caractérisé par le fait qu'**il contient une grue roulante (4), au câble porteur (5) de laquelle il y a attachée une cabine d'hélicoptère ou d'avion (6) et la grue (4) est située dans un espace contenant des éléments de terrain (3), le bras de la grue (4) étant pivotant dans un rayon de 360° et permettant le mouvement horizontal du point d'ancrage du câble porteur (5) le long du bras ainsi que le mouvement vertical du câble porteur (5) au moyen d'un treuil à commande électrique ou manuelle.

2. Le simulateur parachuté conformément la revendication 1, **caractérisé par le fait que** la grue (4) est fournie avec les moyens pour le déplacement sur les rails ou elle est équipée d'un pied marcheur ou d'un train à roues.

3. Le simulateur parachuté conformément les revendications 1 et 2, **caractérisé par le fait que** la cabine d'hélicoptère ou d'avion (6) est fournie avec les éléments identiques à l'équipement réel de la cabine, tels que sièges, portes, éléments de protection et bras de rappel.

4. Le simulateur parachuté conformément les revendications 1, 2, 3, **caractérisé par le fait que** les éléments de terrain (3) sont constitués par les surfaces de terre (8), telles que des surfaces béton, aire, herbeuses, des surfaces à marais, à sable, d'eau ou rocheuses, et/ou par de structures artificielles et réelles naturelles telles que des bâtiments, rues, cours, réservoirs d'eau, structures de rochers, forêts.
